# EUROPEAN PATENT SPECIFICATION

(11) **EP 3 150 276 B1**
(45) Date of publication and mention of the grant of the patent: **26.12.2018**
(21) Application number: 14893580.2
(22) Date of filing: 07.10.2014
(51) Int. Cl.: H01M 4/92, H01M 8/1018

(54) **OXYGEN REDUCTION CATALYST**
SAUERSTOFFREDUKTIONSKATALYSATOR
CATALYSEUR DE RÉDUCTION D'OXYGÈNE

(30) Priority: 26.05.2014 JP 2014108472
(43) Date of publication of application: 05.04.2017
(73) Proprietor: Showa Denko K.K., Tokyo 105-8518 (JP)
(72) Inventor: TEZUKA, Noriyasu, Tokyo 105-8518 (JP); IMAI, Takuya, Tokyo 105-8518 (JP); YOSHIMURA, Masayuki, Tokyo 105-8518 (JP); OHMORI, Masahiro, Tokyo 105-8518 (JP)
(74) Representative: Strehl Schübel-Hopf & Partner
(86) International application number: PCT/JP2014/076812
(87) International publication number: WO 2015/182004

(56) References cited:
- EP-A1- 0 599 492
- EP-A1- 0 978 314
- WO-A1-2013/021688
- JP-A- 2012 200 643
- JP-A- 2013 127 869
- US-A1- 2005 112 451
- US-A1- 2005 129 853
- US-A1- 2009 142 640
- MINGHUI YANG ET AL: "Mesoporous titanium nitride supported Pt nanoparticles as high performance catalysts for methanol electrooxidation", PHYSICAL CHEMISTRY CHEMICAL PHYSICS., vol. 15, no. 4, 28 November 2012 (2012-11-28), pages 1088-1092, XP055240827, GB ISSN: 1463-9076, DOI: 10.1039/C2CP44215A
- MINGHUI YANG ET AL.: 'Mesoporous titanium nitride supported Pt nanoparticles as high performance catalysts for methanol electrooxidation' PHYSICAL CHEMISTRY CHEMICAL PHYSICS vol. 15, no. 4, 28 January 2013, pages 1088 - 1092, XP055240827
- B.RUIZ CAMACHO ET AL.: 'Enhancing oxygen reduction reaction activity and stability of platinum via oxide-carbon composites' CATALYSIS TODAY vol. 202, 15 March 2013, pages 36 - 43, XP055240829

## Description

### Technical Field

The present invention relates to an oxygen reduction catalyst, an ink comprising the catalyst, a catalyst layer comprising the catalyst, an electrode having the catalyst layer, a membrane electrode assembly having the catalyst layer, and a fuel cell having the membrane electrode assembly.

### Background Art

Patent Literature 1 discloses an electrode catalyst containing a catalyst component composed of platinum, a carrier supporting the catalyst component, and an acidic oxide, the electrode catalyst being obtained by subjecting the catalyst component to reduction treatment and adding the acidic oxide, and thereby having improved durability. It is indicated therein that the acidic oxide is for example titanium dioxide. It is also noted therein that using a basic oxide instead of an acidic oxide, which fails to provide a desired interaction with platinum, would not lead to the catalyst component having long-term durability.

Patent Literature 2 discloses a cathode for a fuel cell with improved power generation performance, the cathode for a fuel cell having a catalyst layer composed of a catalyst-supporting conductive carrier and a polymer electrolyte, wherein on the catalyst-supporting conductive carrier, a catalyst contacting with an oxygen absorption/desorption body is further supported or incorporated. The oxygen absorption/desorption body is mentioned as a material with a performance of reversibly absorbing or desorbing oxygen, and its examples mentioned therein include composite ceramics materials containing a basic oxide.

However, even if the technique disclosed in Patent Literature 2 is used to obtain an oxygen reduction catalyst with high activity, using a basic oxide would fail to result in the catalyst component having long-term durability according to Patent Literature 1. Thus, it has been unsuccessful to obtain oxygen reduction catalysts having both high activity and excellent long-term durability.

Meanwhile, zinc oxide, which dissolves under a strongly acidic condition, an environment where a polymer electrolyte fuel cell (hereinafter "PEFC") is operated, has normally not been a material used in a cell of PEFC.

### Citation List

### Patent Literatures

[Patent Literature 1] JP-A-2013-33701
[Patent Literature 2] WO 2005/071777

### Summary of the Invention

### Technical Problem

An object of the present invention is to provide an oxygen reduction catalyst with high catalytic activity and excellent durability, an ink comprising the catalyst, a catalyst layer comprising the catalyst, an electrode having the catalyst layer, a membrane electrode assembly having the catalyst layer, and a fuel cell having the membrane electrode assembly.

### Technical Solution

The present invention includes aspects described below.
(1) An oxygen reduction catalyst comprising titanium dioxide particles, a carbon material and a catalyst component, wherein at least part of a surface of the titanium dioxide particles is covered with zinc oxide, and the titanium dioxide particles and the carbon material each support the catalyst component.
(2) The oxygen reduction catalyst described in the above item (1), which has a structure in which the titanium dioxide particles are dispersed in the oxygen reduction catalyst.
(3) The oxygen reduction catalyst described in the above item (1) or (2), wherein the part of a surface of the titanium dioxide particles is further covered with zinc hydroxide.
(4) The oxygen reduction catalyst described in any one of the above items (1) to (3), wherein the carbon material is at least one carbon material selected from carbon black, graphitized carbon black, graphite, carbon nanotube, carbon nanofiber, porous carbon and activated carbon.
(5) The oxygen reduction catalyst described in any one of the above items (1) to (4), wherein the catalyst component is a noble metal or a noble metal alloy.
(6) The oxygen reduction catalyst described in the above item (5), wherein the noble metal and a noble metal in the noble metal alloy comprise at least one kind selected from Pt, Pd, Ir, Rh and Ru.
(7) The oxygen reduction catalyst described in the above item (5) or (6), wherein the noble metal alloy comprises a noble metal and at least one kind of metal selected from Fe, Ni, Co, Ti, Cu and Mn.
(8) An ink comprising the oxygen reduction catalyst described in any one of the above items (1) to (7).
(9) A catalyst layer comprising the oxygen reduction catalyst described in any one of the above items (1) to (7).
(10) An electrode comprising the catalyst layer described in the above item (9).
(11) A membrane electrode assembly which comprises the catalyst layer described in the above item (9) as a cathode catalyst layer and/or as an anode catalyst layer, wherein a polymer electrolyte membrane is present between the cathode catalyst layer and the anode catalyst layer.
(12) A fuel cell comprising the membrane electrode assembly described in the above item (11).

### Effects of the Invention

The oxygen reduction catalyst of the present invention has high catalytic activity and excellent durability. The use of the oxygen reduction catalyst of the present invention provides a fuel cell with high output power and excellent durability.

### Brief Description of Drawings

[FIG. 1] FIG. 1 shows a transmission electron microscope image of catalyst (1) obtained in Example 1.
[FIG. 2] FIG. 2(a) shows a scanning transmission electron microscope image of catalyst (1) obtained in Example 1. FIG. 2(b) is an elemental mapping image for carbon obtained in the same visual field as in FIG. 2 (a). FIG. 2(c) is an elemental mapping image for platinum obtained in the same visual field as in FIG. 2(a). FIG. 2(d) is an elemental mapping image for titanium obtained in the same visual field as in FIG. 2(a).

### Description of Embodiments

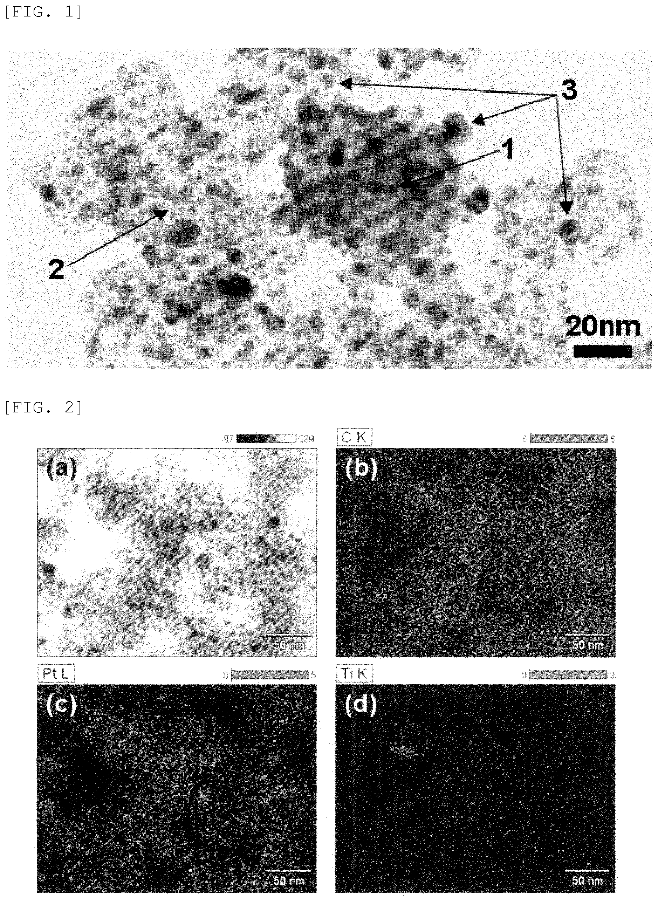

The oxygen reduction catalyst of the present invention comprises titanium dioxide particles, a carbon material and a catalyst component, wherein at least part of a surface of the titanium dioxide particles is covered with zinc oxide, and the titanium dioxide particles and the carbon material each support the catalyst component, the oxygen reduction catalyst preferably having a structure in which the titanium dioxide particles are dispersed in the oxygen reduction catalyst. An example of the structure is shown in FIG. 1.

The titanium dioxide particles may have their entire surface covered with zinc oxide. Preferably, the titanium dioxide particles have their surface covered partially with zinc oxide, in which case both high catalytic activity and high durability are readily obtainable. The surface of the titanium dioxide particles may be further covered partially with zinc hydroxide, in which case much higher catalytic activity can be obtained. It is preferred that the titanium dioxide particles have an appropriate specific surface area in view of, upon supporting the catalyst component, preventing the catalyst component from agglomerating or coarsening. Preferably, the specific surface area normally ranges from 5 to 300 m²/g, and more preferably 100 to 300 m²/g.

The carbon material is preferably at least one carbon material selected from carbon black, graphitized carbon black, graphite, carbon nanotube, carbon nanofiber, porous carbon and activated carbon; is more preferably any of carbon black, graphitized carbon black and carbon nanofiber; and is still more preferably carbon black. The use of these carbon materials can provide the oxygen reduction catalyst with sufficient conductivity, and lead to the effective use of the catalyst component supported by the titanium dioxide particles and by the carbon material. The carbon material preferably has a specific surface area of 600 to 1500 m²/g in terms of, upon supporting the catalyst component, preventing the catalyst component from agglomerating or coarsening.

In the oxygen reduction catalyst, a mass ratio of titanium dioxide particles whose surface is covered at least partially with zinc oxide to the carbon material is preferably in the range of from 2:8 to 8:2, in which case the oxygen reduction catalyst with high catalytic activity and excellent durability is obtained.

The catalyst component is preferably a noble metal or a noble metal alloy; and more preferably a noble metal alloy. Further, the noble metal and a noble metal in the noble metal alloy is preferably at least one kind selected from Pt, Pd, Ir, Rh and Ru; more preferably includes any of Pt, Pd and Ru; and still more preferably includes Pt. The noble metal alloy preferably includes a noble metal and at least one kind of metal selected from Fe, Ni, Co, Ti, Cu and Mn; more preferably includes a noble metal and at least one kind of metal selected from Ni, Co and Mn; and still more preferably includes a noble metal and Co. The use of these as the catalyst component easily leads to obtaining good oxygen reduction catalytic activity.

The catalyst component preferably has a particle diameter of 2 to 10 nm. The particle diameter of such an extent is preferable, which improves the catalytic activity and readily achieves stability in the PEFC operation environment.

In the whole of the oxygen reduction catalyst, the catalyst component preferably accounts for 10 to 60 mass%. This range is preferable in term of easily suppressing the catalyst component from agglomerating or coarsening.

The oxygen reduction catalyst of the present invention can be produced, for example through a process in which powder of the titanium dioxide particles whose surface is covered at least partially with zinc oxide is uniformly mixed with a carbon material and on the resultant mixture, a metal such as platinum is supported by an ordinary method.

The titanium dioxide particles may be mixed with the carbon material in such a method as a method using a roll tumbling mill, a ball mill, a small-diameter ball mill (bead mill), a medium-stirring mill, an air-flow pulverizer, a mortar, an automatic kneading mortar, a crushing tank or a jet mill.

A mixing ratio in mass between the titanium dioxide particles and the carbon material is preferably in the range of 2:8 to 8:2 in terms of obtaining the oxygen reduction catalyst with high catalytic activity and excellent durability.

Titanium dioxide particles varying in the degree of their covering, including the titanium dioxide particles whose surface is covered entirely with zinc oxide and the titanium dioxide particles whose surface is covered only partially with zinc oxide, are obtainable as commercially available products. Various kinds of the titanium dioxide particles whose surface is covered partially with zinc oxide are commercially available as, e.g., materials of cosmetics, and desired ones are easy to select. Alternatively, titanium dioxide particles whose surface is covered to any degree with zinc oxide may be obtained by a method conventionally known, such as a liquid-phase method including an immersion method or a gas-phase method including a deposition method.

The titanium dioxide particles whose surface is covered partially with zinc oxide and whose surface is also covered partially with zinc hydroxide may be selected likewise from commercially-available products and the like. In particular, titanium dioxide particles whose surface is covered at least partially with zinc oxide and which is obtained by a liquid-phase method readily contains zinc hydroxide in zinc oxide, and hence from the titanium dioxide particles whose surface is covered at least partially with zinc oxide and which is obtained by a liquid-phase method, titanium dioxide particles whose surface is covered with zinc oxide and zinc hydroxide are easily selected.

To form an anode and/or a cathode electrode, the oxygen reduction catalyst of the present invention may be processed into an ink by such a manner as shown in an example below or an ordinary method. For example by applying the ink containing the resultant oxygen reduction catalyst of the present invention to an electrode substrate, a catalyst layer containing the oxygen reduction catalyst of the present invention can be formed on the electrode substrate to obtain an electrode comprising the oxygen reduction catalyst layer of the present invention.

The catalyst layer comprising the oxygen reduction catalyst of the present invention may be used as a cathode catalyst layer and/or an anode catalyst layer, and between the cathode catalyst layer and the anode catalyst layer, a polymer electrolyte membrane may be arranged to form a membrane electrode assembly. Further, a fuel cell comprising the membrane electrode assembly with high output power and high durability is obtainable.

### Example

Hereinbelow, an example of the present invention will be shown, thereby describing the present invention more specifically. That example is given merely as an illustrative one and in no way limits the present invention. In Example and Comparative Example, quantitative analysis of metal elements, X-ray photoelectron spectroscopy, transmission electron microscopy and scanning transmission electron microscopy were conducted in the following manners.

### 1. Quantitative analysis of metal elements

A sample in an amount of about 40 mg was weighed out in a beaker, and after adding thereto aqua regia and then sulfuric acid, was heat-decomposed. The product heat-decomposed, after its volume was made constant with ultrapure water, was appropriately diluted, and then with ICP emission analysis device (VISTA-PRO manufactured by SII), quantity of metal elements was determined.

### 2. X-ray photoelectron spectroscopy

An X-ray photoelectron spectrum of a sample was measured with Quantera II manufactured by ULVAC-PHI, INCORPORATED. As a source of X-ray, Al-Kα ray (1486.6 eV, 25 W) was used, and photoelectron extraction angle was set at 45 degree. The correction of bond energy was performed by defining carbon-carbon bond peak of carbon 1s spectrum as 284.6 eV.

### 3. Transmission electron microscopy

Transmission electron microscopy (TEM) was conducted with H9500 (accelerating voltage 300 kV) manufactured by Hitachi, Ltd. An observation sample was prepared by dropwise adding, on a microgrid for TEM, a dispersion liquid given by ultrasonically dispersing a sample powder in ethanol.

### 4. Scanning transmission electron microscopy and Energy dispersive fluorescence X-ray analysis

Scanning transmission electron microscopy (STEM) and energy dispersive fluorescence X-ray analysis (EDX) were conducted with HD2300 (accelerating voltage 200 kV) manufactured by Hitachi, Ltd. An observation sample was prepared by dropwise adding, on a microgrid for TEM, a dispersion liquid given by ultrasonically dispersing a sample powder in ethanol.

### Example 1:

### <Mixing of titanium dioxide particles with carbon material>

0.3 g of titanium dioxide particles whose surface was covered with zinc oxide, ST-31, (manufactured by Ishihara Sangyo Kaisha, Ltd., zinc oxide covering the surface contains zinc hydroxide), 0.7 g of ketchen black EC600 JD (manufactured by Lion Corporation), and 20 mL of 2-propanol, were introduced in a container, and mixed by using a ball mill at 700 rpm for 10 minutes . Thereafter, through the filtration and drying of the mixture, a mixture was obtained which contained titanium dioxide particles whose surface was covered with zinc oxide and the carbon material (hereinafter referred to as the "mixture (1)").

### <Supporting catalyst component>

To 1 L of pure water, 0.20 g of the mixture (1) was added, and the resultant mixture was shaken with an ultrasonic washing device for 30 minutes. The resultant suspension, with its liquid temperature kept at 80°C, was stirred for 30 minutes. Thereto, 40 mL of an aqueous solution containing 0.517 g of chloroplatinic acid hexahydrate (equivalent to 0.195 g of platinum) and 0.083 g of cobalt(II) acetate tetrahydrate (equivalent to 0.020 g of cobalt) was dropwise added over a period of 1 hour. At this time, 1.0 mol/L of an aqueous sodium hydroxide solution was dropwise added properly to keep the pH of the suspension at about 7.0. Thereafter, the suspension, with its temperature kept at 80°C, was stirred for 3 hours. Next, 60 ml of an aqueous solution containing 0.583 g of sodium borohydride was dropwise added to the suspension over a period of 30 minutes. Thereafter, the suspension, with its liquid temperature kept at 80°C, was stirred for 1 hour. After the completion of the reaction, the suspension was cooled to room temperature, and was subjected to filtration to separate black powder off, which was then dried.

### <Forming catalyst component as alloy>

The black powder was put in a quartz tubular furnace, and under the atmosphere of a mixed gas of hydrogen and nitrogen containing 4 vol% of hydrogen, was heated at a heating rate of 10°C/min to 700°C, and heat-treated at 700°C for 30 minutes, in order to form platinum and cobalt into an alloy. Thereby, an oxygen reduction catalyst containing the alloy of platinum and cobalt as a catalyst component (hereinafter referred to as the "catalyst (1)") was obtained. The catalyst (1) contained 47 mass% of platinum, wherein a molar ratio of platinum to cobalt (Pt:Co) was 3:1.

### Comparative Example 1:

Example 1 was repeated except that the titanium dioxide particles whose surface was covered with zinc oxide was replaced by titanium dioxide particles whose surface was not covered, ST-01, (manufactured by Ishihara Sangyo Kaisha, Ltd.), resulting in giving an oxygen reduction catalyst (hereinafter referred to as the "catalyst (2)"). The catalyst (2) contained 47 mass% of platinum, wherein a molar ratio of platinum to cobalt (Pt:Co) was 3:1.

### Evaluations:

### <Result of quantitative analysis of metal elements>

Contents of Zn element and Ti element (mass%) obtained by quantitative analysis of metal elements, and a ratio in the number of atoms (Zn/Ti), regarding the catalyst (1) and the catalyst (2), are shown in Table 1. The catalyst (1) contained 1.3 mass% of Zn element, wherein a ratio in the number of atoms of Zn element to Ti element was 0.14. In the catalyst (2), Zn element was undetected.

**[Table 1]**

| | Catalyst | Zn content (mass%) | Ti content (mass%) | Zn/Ti ratio in number of atoms |
|---|---|---|---|---|
| Example 1 | (1) | 1.3 | 6.9 | 0.14 |
| Comparative Example 1 | (2) | 0.0 | 7.7 | 0.0 |

### <Result of X-ray photoelectron spectroscopy>

Contents of Zn element and Ti element present in the vicinity of the sample surface (% in the number of atoms) obtained by X-ray photoelectron spectroscopy, and a ratio in the number of atoms (Zn/Ti), regarding the catalyst (1) and the catalyst (2), are shown in Table 2. The catalyst (1) contained 0.7 % in the number of atoms of Zn element, wherein a ratio in the number of atoms of Zn element to Ti element was 1.4. In the catalyst (2), Zn element was undetected.

The Zn element component, when detected from an X-ray photoelectron spectrum of Zn2p obtained for the catalyst (1), was found to be composed of zinc oxide (ZnO) and zinc hydroxide (Zn(OH)₂) existent at a ratio of 0.76:0.24.

The foregoing results show that the existent ratio of Zn element to Ti element in the catalyst (1) was about ten times higher in the vicinity of the sample surface than in the whole of the sample, and Zn element was present primarily in the form of zinc oxide. This verifies that zinc oxide is present covering at least part of the surface of titanium dioxide particles.

**[Table 2]**

| | Catalyst | Zn content (% in number of atoms) | Ti content (% in number of atoms) | Zn/Ti ratio in number of atoms |
|---|---|---|---|---|
| Example 1 | (1) | 0.7 | 0.5 | 1.4 |
| Comparative Example 1 | (2) | 0.0 | 0.8 | 0.0 |

### <Result of transmission electron microscopy>

A transmission electron microscope image obtained for the catalyst (1) is shown in FIG. 1. In the figure, the number 1 denotes titanium dioxide particles, the number 2 denotes a carbon material, and the number 3 denotes a catalyst component. FIG. 1 verifies that in the catalyst (1), the titanium dioxide particles and the carbon material each support the catalyst component composed of the alloy particles of platinum and cobalt.

### <Result of scanning transmission electron microscopy>

A scanning transmission electron microscope image obtained for the catalyst (1) is shown in FIG. 2 (a). The elemental mappings of carbon, platinum and titanium, obtained in the same visual field as in FIG. 2 (a), are shown respectively in FIG. 2 (b) to (d). The fact that the geometric distributions of carbon, platinum and titanium substantially coincide with each other shows that titanium dioxide particles are dispersed in the oxygen reduction catalyst.

### <Production of polymer electrolyte fuel cell single cell and Evaluation of its power generation characteristic>

### (1) Preparation of cathode ink

35 mg of the catalyst (1), 0.315 g of an aqueous solution (aqueous solution of 5% Nafion, manufactured by Wako Pure Chemical Industries, Ltd.) containing 15.8 mg of a proton conductive material (Nafion (NAFION) (registered trademark)), 2.0 mL of pure water, and 2.0 mL of 2-propanol, were weighed out in a vial, and these were ultrasonically irradiated in iced water for 30 minutes. Thereby, a cathode ink (1) was prepared.

The same procedure as described above using the catalyst (2) resulted in preparing a cathode ink (2).

### (2) Preparation of cathode electrode having fuel cell catalyst layer

A gas diffusion layer (carbon paper (TGP-H-060 manufactured by Toray Industries, Inc.)) was immersed in acetone for 30 seconds, degreased and then dried. Subsequently, the resultant gas diffusion layer was immersed in an aqueous solution of 10% polytetrafluoroethylene (PTFE) for 30 seconds.

The immersed product, after dried at room temperature, was heated at 350°C for 1 hour, so that a water-repellant gas diffusion layer having PTFE dispersed in the carbon paper (hereinafter also referred to as "GDL") was obtained.

Next, a surface of the above GDL formed into a size of 5 cm×5 cm was coated by using an automatic spray-coating device (manufactured by SAN-EI TECH Ltd.) with the cathode ink (1) at 80°C, which resulted in preparing an electrode having, on the GDL surface, a cathode catalyst layer in which a total amount of the catalyst (1) was 0.425 mg/cm² per unit area (hereinafter also referred to as the "cathode (1)").

The same procedure as described above using the cathode ink (2) resulted in preparing the cathode (2). In the cathode (1) and in the cathode (2), an amount of noble metal per unit area was set at 0.2 mg/cm².

### (3) Preparation of anode ink

To 50 ml of pure water, 0.6 g of a platinum-supporting carbon catalyst (TEC10E70TPM manufactured by Tanaka Kikinzoku Kogyo), and 5 g of an aqueous solution (aqueous solution of 5%Nafion, manufactured by Wako Pure Chemical Industries, Ltd.) containing 0.25 g of the proton conductive material were added. This was followed by stirring with an ultrasonic dispersing device for 1 hour. Thereby, an anode ink (1) was prepared.

### (4) Preparation of anode electrode having fuel cell catalyst layer

A surface of the above GDL formed into a size of 5 cm×5 cm was coated by using the automatic spray-coating device (manufactured by SAN-EI TECH Ltd.) with the anode ink (1) at 80°C, which resulted in preparing an electrode having, on the GDL surface, an anode catalyst layer in which a total amount of the platinum-supporting carbon catalyst was 1.00 mg/cm² per unit area (hereinafter also referred to as the "anode (1)").

### (5) Preparation of membrane electrode assembly for fuel cell

A Nafion membrane (NR-212, manufactured by DuPont) as an electrolyte membrane, the cathode (1) as a cathode, and the anode (1) as an anode, were provided.

A membrane electrode assembly for a fuel cell, in which the electrolyte membrane was arranged between the cathode (1) and the anode (1), (hereinafter referred to as "MEA"), was prepared in the following manner.

The electrolyte membrane was sandwiched by the cathode (1) and the anode (1), and these were thermally compression-bonded to each other such that the cathode catalyst layer (1) and the anode catalyst layer (1) would adhere to the electrolyte membrane, by using a hot-pressing device, at a temperature of 140°C, a pressure of 3 MPa for 7 minutes, resulting in preparing MEA (1) .

The same procedure as described above using the cathode (2) instead of the cathode (1) resulted in preparing MEA (2).

### (6) Preparation of single cell

MEA (1) was held by two sealing materials (gaskets), two separators each with a gas passage, two collector plates and two rubber heaters, sequentially, and the periphery was secured with bolts, and these were fastened so as to give a predetermined surface pressure (4 N). As a result, a single cell of polymer electrolyte fuel cell (hereinafter also referred to as the "single cell (1)") was prepared (cell area: 25 cm²).

The same procedure as described above using MEA (2) instead of MEA (1) resulted in preparing a single cell (2). A power generation area in these single cells was set at 25 cm².

### (7) Evaluation of current-voltage characteristic and potential cycle durability test

The single cell (1) was adjusted to a temperature of 80°C, an anode humidifier to 80°C, and a cathode humidifier to 80°C. Thereafter, the anode side was supplied with hydrogen, and the cathode side was supplied with air, as a fuel, and current-voltage (I-V) characteristic of the single cell (1) was evaluated.

Subsequently, a potential cycle durability test was conducted in the following manner. With the single cell (1) adjusted to a temperature of 80°C, the anode humidifier to 80°C and the cathode humidifier to 80°C, the anode side was supplied with hydrogen, and the cathode side was supplied with nitrogen, during which a triangular wave potential cycle composed of 1.0 V-1.5 V and 1.5 V-1.0 V was applied 4000 times.

After the application of the triangular potential cycle 4000 times, I-V measurement was conducted under the conditions described above.

The same procedure as described above using the single cell (2) was taken to evaluate its current-voltage (I-V) characteristic and conduct a potential cycle durability test.

### <Results of evaluation of power generation performance and durability of polymer electrolyte fuel cell single cell>

In the potential cycle durability test, a ratio (%) of a voltage value at 0.2 A/cm² obtained from I-V measurement conducted after the application of the potential cycle 4000 times, to a voltage value at 0.2 A/cm² obtained from I-V measurement conducted before the application of the potential cycle (hereinafter also referred to as the "initial voltage"), is defined as a voltage retention ratio.

Here, in I-V characteristic of a fuel cell, a voltage value at a given current density is an indicator of power generation performance of that fuel cell. Specifically, the higher the initial voltage is, the higher the initial power generation performance of that fuel cell is and accordingly the higher the catalytic activity of the oxygen reduction catalyst is. Further, the higher the voltage retention ratio is, the less the power generation performance of the fuel cell and accordingly the catalytic activity of the oxygen reduction catalyst deteriorate, namely the higher the durability is.

An initial voltage at 0.2 A/cm² and a voltage retention ratio at 0.2 A/cm² after the application of the potential cycle 4000 times, obtained from the potential cycle durability test, are shown in Table 3.

The single cell (1) according to Example 1 had an initial voltage of 0.789 V, which was higher by 13 mV than the single cell (2) according to Comparative Example 1, which had an initial voltage of 0.776. This shows that as compared with the single cell (2), the single cell (1) provides higher power generation performance, namely as compared with the catalyst (2), the catalyst (1) has higher oxygen reduction catalytic activity.

In the single cell (1) according to Example 1, the voltage retention ratio after the application of the potential cycle 4000 times was 21%, which was higher than the voltage retention ratio 7% of the single cell (2) according to Comparative Example 1, by as much as 14%. This shows that as compared with the single cell (2), the single cell (1) has higher durability, namely as compared with the catalyst (2), the catalyst (1) has higher durability.

From the foregoing results, the oxygen reduction catalyst prepared in the above Example has higher catalytic activity and superior durability as compared with the oxygen reduction catalyst prepared in the above Comparative Example.

**[Table 3]**

| | Catalyst | Covering with zinc oxide | Initial voltage* (V) | Voltage retention ratio* (%) |
|---|---|---|---|---|
| Example 1 | (1) | Covered | 0.789 | 21 |
| Comparative Example 1 | (2) | Not covered | 0.776 | 7 |

| | | | | |
|---|---|---|---|---|
| *value at 0.2 A/cm² | | | | |

## Claims

1. An oxygen reduction catalyst comprising titanium dioxide particles, a carbon material and a catalyst component, wherein the titanium dioxide particles and the carbon material each support the catalyst component, **characterized in that** at least part of a surface of the titanium dioxide particles is covered with zinc oxide.

2. The oxygen reduction catalyst according to claim 1, which has a structure in which the titanium dioxide particles are dispersed in the oxygen reduction catalyst.

3. The oxygen reduction catalyst according to claim 1 or 2, wherein the part of a surface of the titanium dioxide particles is further covered with zinc hydroxide.

4. The oxygen reduction catalyst according to any one of claims 1 to 3, wherein the carbon material is at least one carbon material selected from carbon black, graphitized carbon black, graphite, carbon nanotube, carbon nanofiber, porous carbon and activated carbon.

5. The oxygen reduction catalyst according to any one of claims 1 to 4, wherein the catalyst component is a noble metal or a noble metal alloy.

6. The oxygen reduction catalyst according to claim 5, wherein the noble metal and a noble metal in the noble metal alloy comprise at least one kind selected from Pt, Pd, Ir, Rh and Ru.

7. The oxygen reduction catalyst according to claim 5 or 6, wherein the noble metal alloy comprises a noble metal and at least one kind of metal selected from Fe, Ni, Co, Ti, Cu and Mn.

8. An ink comprising the oxygen reduction catalyst according to any one of claims 1 to 7.

9. A catalyst layer comprising the oxygen reduction catalyst according to any one of claims 1 to 7.

10. An electrode comprising the catalyst layer according to claim 9.

11. A membrane electrode assembly which comprises the catalyst layer according to claim 9 as a cathode catalyst layer and/or as an anode catalyst layer, wherein a polymer electrolyte membrane is present between the cathode catalyst layer and the anode catalyst layer.

12. A fuel cell comprising the membrane electrode assembly according to claim 11.

## Patentansprüche

1. Sauerstoffreduktionskatalysator, umfassend Titandioxidteilchen, ein Kohlenstoffmaterial und eine Katalysatorkomponente, wobei die Titandioxidteilchen und das Kohlenstoffmaterial jeweils die Katalysatorkomponente tragen, **dadurch gekennzeichnet, dass** mindestens ein Teil einer Oberfläche der Titandioxidteilchen mit Zinkoxid bedeckt ist.

2. Sauerstoffreduktionskatalysator nach Anspruch 1, der eine Struktur aufweist, in der die Titandioxidpartikel im Sauerstoffreduktionskatalysator dispergiert sind.

3. Sauerstoffreduktionskatalysator nach Anspruch 1 oder 2, worin der Teil einer Oberfläche der Titandioxidpartikel weiterhin mit Zinkhydroxid bedeckt ist.

4. Sauerstoffreduktionskatalysator nach einem der Ansprüche 1 bis 3, worin das Kohlenstoffmaterial mindestens unter Ruß, graphitiertem Ruß, Graphit, Kohlenstoff-Nanoröhrchen, Kohlenstoff-Nanofaser, poröser Kohle und Aktivkohle ausgewähltes Kohlenstoffmaterial ist.

5. Sauerstoffreduktionskatalysator nach einem der Ansprüche 1 bis 4, worin die Katalysatorkomponente ein Edelmetall oder eine Edelmetalllegierung ist.

6. Sauerstoffreduktionskatalysator nach Anspruch 5, worin das Edelmetall und ein Edelmetall in der Edelmetalllegierung mindestens ein Mitglied der aus Pt, Pd, Ir, Rh und Ru bestehenden Gruppe umfassen.

7. Sauerstoffreduktionskatalysator nach Anspruch 5 oder 6, worin die Edelmetalllegierung ein Edelmetall und mindestens ein unter Fe, Ni, Co, Ti, Cu und Mn ausgewähltes Metall umfasst.

8. Den Sauerstoffreduktionskatalysator nach einem der Ansprüche 1 bis 7 umfassende Tinte.

9. Den Sauerstoffreduktionskatalysator nach einem der Ansprüche 1 bis 7 umfassende Katalysatorschicht.

10. Die Katalysatorschicht nach Anspruch 9 umfassende Elektrode.

11. Membranelektrodenanordnung, die die Katalysatorschicht nach Anspruch 9 als Kathodenkatalysatorschicht und/oder als Anodenkatalysatorschicht umfasst, worin eine Polymerelektrolytmembran zwischen der Kathodenkatalysatorschicht und der Anodenkatalysatorschicht vorhanden ist.

12. Die Membranelektrodenanordnung nach Anspruch 11 umfassende Brennstoffzelle.

## Revendications

1. Catalyseur de réduction d'oxygène comprenant des particules de dioxyde de titane, un matériau de carbone et un constituant de catalyseur, dans lequel les particules de dioxyde de titane et le matériau de carbone supportent chacun le constituant de catalyseur, **caractérisé en ce qu'**au moins une partie d'une surface des particules de dioxyde de carbone est recouverte d'oxyde de zinc.

2. Catalyseur de réduction d'oxygène selon la revendication 1, qui présente une structure dans laquelle les particules de dioxyde de titane sont dispersées dans le catalyseur de réduction d'oxygène.

3. Catalyseur de réduction d'oxygène selon la revendication 1 ou 2, dans lequel la partie d'une surface des particules de dioxyde de titane est en outre recouverte d'hydroxyde de zinc.

4. Catalyseur de réduction d'oxygène selon l'une quelconque des revendications 1 à 3, dans lequel le matériau de carbone est au moins un matériau de carbone sélectionné parmi le noir de carbone, le noir de carbone graphitisé, le graphite, un nanotube de carbone, une nanofibre de carbone, du carbone poreux et du charbon actif.

5. Catalyseur de réduction d'oxygène selon l'une quelconque des revendications 1 à 4, dans lequel le constituant de catalyseur est un métal noble ou un alliage de métaux nobles.

6. Catalyseur de réduction d'oxygène selon la revendication 5, dans lequel le métal noble et un métal noble dans l'alliage de métaux nobles comprennent au moins un type sélectionné parmi Pt, Pd, Ir, Rh et Ru.

7. Catalyseur de réduction d'oxygène selon la revendication 5 ou 6, dans lequel l'alliage de métaux nobles comprend un métal noble et au moins un type de métal sélectionné parmi Fe, Ni, Co, Ti, Cu et Mn.

8. Encre comprenant le catalyseur de réduction d'oxygène selon l'une quelconque des revendications 1 à 7.

9. Couche de catalyseur comprenant le catalyseur de réduction d'oxygène selon l'une quelconque des revendications 1 à 7.

10. Electrode comprenant la couche de catalyseur selon la revendication 9.

11. Ensemble d'électrode à membrane comprenant la couche de catalyseur selon la revendication 9 faisant office de couche de catalyseur de cathode et/ou de couche de catalyseur d'anode, dans lequel une membrane d'électrolyte polymère est présente entre la couche de catalyseur de cathode et la couche de catalyseur d'anode.

12. Pile à combustible comprenant l'ensemble d'électrode à membrane selon la revendication 11.
